Europäisches Patentamt

European Patent Office

Office européen des brevets

(19)

(11) EP 1 519 498 A1

(12) **EUROPEAN PATENT APPLICATION**
published in accordance with Art. 158(3) EPC

(43) Date of publication:
**30.03.2005 Bulletin 2005/13**

(51) Int Cl.⁷: **H04B 7/26**, H04L 1/18

(21) Application number: 03774034.7

(86) International application number:
**PCT/JP2003/014627**

(22) Date of filing: **18.11.2003**

(87) International publication number:
**WO 2004/047338 (03.06.2004 Gazette 2004/23)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **20.11.2002 JP 2002337208**

(71) Applicant: **MATSUSHITA ELECTRIC INDUSTRIAL CO., LTD.**
**Kadoma-shi, Osaka 571-8501 (JP)**

(72) Inventor: **IOCHI, Hitoshi**
**Yokohama-shi, Kanagawa 235-0023 (JP)**

(74) Representative: **Grünecker, Kinkeldey, Stockmair & Schwanhäusser Anwaltssozietät**
**Maximilianstrasse 58**
**80538 München (DE)**

(54) **BASE STATION APPARATUS, AND METHOD FOR CONTROLLING TRANSMISSION POWER FOR RETRANSMITTED PACKETS**

(57)    When an H-ARQ is used for downlink high-speed packet transmission, appropriate transmit power control is performed on a retransmission packet for effective use of transmit power resources and reduced interference in a radio communication system, and the transmit power of the retransmission packets (transmission #2, transmission #3) is controlled to transmit power value so that the reception quality of the retransmission packets at the mobile station apparatus is lower than the reception quality of the initial transmission packet (transmission #1) at the mobile station apparatus. For example, the transmit power value of the retransmission packet is controlled to a value lower than the transmit power value of the initial transmission packet by a predetermined value X [dB].

FIG.5

**Description**

Technical Field

The present invention relates to a base station apparatus and a method of controlling transmit power of a retransmission packet used in a radio communication system which carries out downlink high-speed packet transmission.

Background Art

In the field of radio communications, a downlink high-speed packet transmission scheme has been developed in which a high-speed, large volume downlink channel is shared by a plurality of mobile station apparatuses and packets are transmitted from a base station apparatus to the mobile station apparatuses. The downlink high-speed packet transmission scheme uses a scheduling technology and adaptive modulation technology to enhance transmission efficiency.

The scheduling technology is a technology whereby a base station apparatus sets mobile station apparatuses to which downlink high-speed packets are transmitted slot by slot and assigns packets to be transmitted to the respective mobile station apparatuses. On the other hand, the adaptive modulation technology is a technology whereby a modulation scheme or error correcting coding scheme (MCS: Modulation and Coding Scheme) is adaptively determined according to the condition of a propagation path of a mobile station apparatus to which a packet is transmitted.

Furthermore, a radio communication system which carries out high-speed packet transmission uses an ARQ (Automatic Repeat Request), and H-ARQ (Hybrid-Automatic Repeat Request) in particular, to improve the data reception performance.

In the ARQ, a base station apparatus and a mobile station apparatus are connected through a bidirectional transmission path, the base station apparatus transmits the mobile station apparatus a packet including a codeword generated by applying error detection coding to an information bit to detect errors at the mobile station apparatus. When no error is detected in the received packet, the mobile station apparatus transmits a reception confirmation signal (Positive Acknowledgment: ACK signal) indicating that the packet has been received correctly and when an error is detected in the received packet, the mobile station apparatus transmits a retransmission request signal (Negative Acknowledgment: NACK signal) to the base station apparatus. Upon reception of a NACK signal, the base station apparatus retransmits the same packet. The base station apparatus repeats retransmission of the same packet until an ACK signal is received.

For example, when the base station apparatus transmits a first packet and the mobile station apparatus receives this first packet correctly, the mobile station apparatus transmits an ACK signal to the base station apparatus. Upon reception of this ACK signal, the base station apparatus transmits a second packet next. When this second packet is received with an error, the mobile station apparatus transmits a NACK signal to the base station apparatus. When the base station apparatus receives the NACK signal from this mobile station apparatus, the base station apparatus transmits the second packet again. That is, the base station apparatus retransmits the same packet unless an ACK signal is received from the mobile station apparatus. In this way, the ARQ realizes high-quality transmission.

The above described ARQ can realize high-quality transmission, but propagation delay may increase when retransmission is repeated. Especially when a propagation environment is poor, the data error rate increases, and therefore the retransmission count increases and the propagation delay increases drastically. As a technology of handling propagation delays in this ARQ, an H-ARQ is used in a radio communication system which carries out high-speed packet transmission.

The H-ARQ is a scheme combining the ARQ with an error correcting code and is intended to improve the error rate of a received signal using error correction, reduce a retransmission count and thereby improve throughput. As predominant schemes of this H-ARQ, two schemes are proposed; Chase Combining type and Incremental Redundancy type.

The Chase Combining type H-ARQ (hereinafter referred to as "CC type H-ARQ") is characterized in that a base station apparatus retransmits the same packet as that transmitted previously. Upon reception of the retransmitted packet, the mobile station apparatus combines the previously transmitted packet with the packet retransmitted this time and carries out error correcting decoding on the combined signal. In this way, the CC type H-ARQ improves the reception level by combining the codeword included in the previously received packet and the codeword included in the packet retransmitted this time, and therefore the error rate characteristic is improved every time retransmission is repeated. Thus, errors are eliminated at a smaller retransmission count than the normal ARQ, and so throughput can be improved.

On the other hand, the Incremental Redundancy type H-ARQ (hereinafter referred to as "IR type H-ARQ") is characterized in that a base station apparatus retransmits a packet including a parity bit different from a parity bit included in a previously transmitted packet. The mobile station apparatus stores received parity bits in a buffer and when a retransmission packet is received, the mobile station apparatus performs error correcting decoding using both the parity bit included in the previously received packet and the parity bit included in the packet received at the time of retransmission. Thus, in the IR type, the parity bit used for error correcting decoding is incremented for each retransmission, and therefore the error correction performance of the mobile station apparatus improves and as a result, the error rate characteristic is improved every time retransmission is repeated. In this way, errors are eliminated at a smaller retransmission count than that in a normal ARQ, and so throughput can be improved.

In this H-ARQ, retransmission packets are used in an auxiliary manner for an initial transmission packet to improve the error rate characteristic.

Operations of the base station apparatus and mobile station apparatus in the radio communication system which carries out high-speed packet transmission will be summarized below.

The base station apparatus predicts channel quality based on a reported value of a downlink channel condition transmitted from each mobile station apparatus, etermines the mobile station apparatus having the best channel quality as the transmission destination and assigns a packet to each time slot for the destination. Then, the base station apparatus carries out error correcting coding and modulation on the packet based on the information indicating the scheduling result and according to the scheme determined by the scheduling, and transmits the packet to the mobile station apparatus which becomes the transmission destination.

Each mobile station apparatus performs demodulation at a time slot to which a packet directed to the mobile station apparatus is assigned based on the received information indicating the scheduling result, performs CRC detection, etc., and when the packet data has been successfully demodulated, the mobile station apparatus transmits an ACK signal indicating the successful demodulation. On the other hand, when the packet data contains an error and the packet data has not been demodulated correctly, each mobile station apparatus transmits a NACK signal indicating the demodulation failure to the base station apparatus and thereby requests retransmission of the packet data.

Upon reception of an ACK signal, the base station apparatus transmits the next packet and upon reception of a NACK signal, the base station apparatus retransmits the same packet.

Thus, according to the downlink high-speed packet transmission scheme, one channel is shared by all mobile station apparatuses existing in a cell or sector and packets are transmitted efficiently, and thereby code resources can be effectively used.

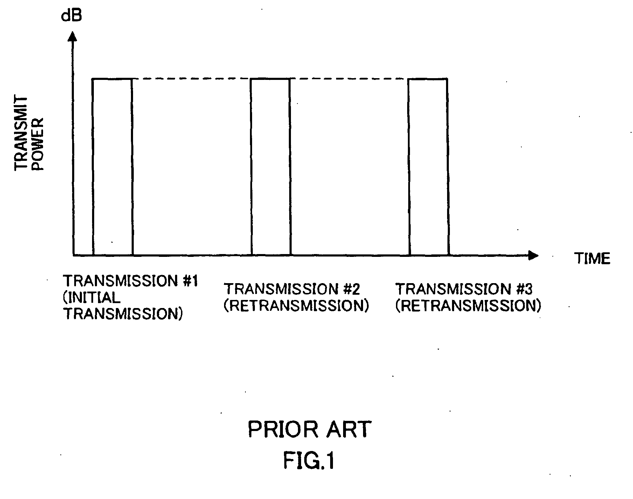

Now, when adaptive modulation and H-ARQ are used for downlink high-speed packet transmission, a technology for optimizing anMCS according to reception quality (e.g., Ec/N0, SIR, CIR, etc.) of a packet received at a mobile station apparatus is disclosed in, for example, Document "Comparison of Hybrid ARQ Packet Combining Algorithm in High Speed Downlink Packet Access in a Multipath Fading Channel, IEICETRANS. FUNDAMENTALS, VOL.E85-A, NO.7, JULY 2002, pp. 1557-1568." According to this document, transmit power of a downlink packet is supposed to be always constant irrespective of whether it corresponds to the time of initial transmission or the time of retransmission as shown in FIG.1.

As described above, the H-ARQ uses a retransmission packet as a supplement for an initial transmission packet to improve the error rate characteristic, and therefore the mobile station apparatus is not required to have so high reception quality at the time of retransmission as at the time of initial transmission. Nonetheless, if transmit power of a downlink packet is always constant irrespective of whether it corresponds to the time of initial transmission or the time of retransmission as in the case of the above described document, extra transmit power is used at the time of retransmission, which is not appropriate from the standpoint of effective use of transmit power resources.

Disclosure of Invention

It is an object of the present invention to provide a base station apparatus and a method of controlling transmit power of retransmission packets, when an H-ARQ is used for downlink high-speed packet transmission, capable of performing appropriate transmit power control over retransmission packets to effectively use transmit power resources and reducing interference in a radio communication system.

In order to attain the above described object, according to the present invention, a base station apparatus controls transmit power of a retransmission packet to a transmit power value so that reception quality of the retransmission packet at a mobile station apparatus is lower than reception quality of the initial transmission packet at the mobile station apparatus. This allows transmit power resources to be effectively used and interference in the radio communication system to be decreased.

Brief Description of Drawings

FIG.1 illustrates conventional transmit power;
FIG.2 is a block diagram showing a configuration of a base station apparatus according to Embodiment 1 of the present invention;
FIG.3 illustrates a block diagram showing a configuration of a mobile station apparatus according to Embodiment 1 of the present invention;
FIG.4 is a block diagram showing a configuration of a scheduler of the base station apparatus according to Embodiment 1 of the present invention;
FIG.5 illustrates transmit power control according to Embodiment 1 of the present invention;
FIG.6 illustrates transmit power control according to Embodiment 2 of the present invention;
FIG.7 is a block diagram showing a configuration of a scheduler of a base station apparatus according to Embodiment 3 of the present invention;

FIG.8 illustrates a change in quality of a downlink channel according to Embodiment 3 of the present invention;

FIG.9 illustrates transmit power control according to Embodiment 3 of the present invention;

FIG.10 illustrates reception power according to Embodiment 3 of the present invention;

FIG.11 is block diagram showing a configuration of a scheduler of a base station apparatus according to Embodiment 4 of the present invention;

FIG.12 is a graph illustrating a relationship between an SIR and FER (Frame Error Rate) per transmission when a modulation scheme according to Embodiment 4 of the present invention is QPSK;

FIG.13 is a table illustrating correspondence between a retransmission count and IR gain according to Embodiment 4 of the present invention;

FIG.14 illustrates transmit power control according to Embodiment 4 of the present invention;

FIG.15 is a block diagram showing a configuration of a scheduler of a base station apparatus according to Embodiment 5 of the present invention;

FIG. 16 illustrates transmit power control according to Embodiment 5 of the present invention;

FIG.17 illustrates reception power according to Embodiment 5 of the present invention;

FIG.18 is a block diagram showing a configuration of a scheduler of a base station apparatus according to Embodiment 6 of the present invention;

FIG.19A illustrates transmit power control according to Embodiment 6 of the present invention;

FIG.19B illustrates transmit power control according to Embodiment 6 of the present invention;

FIG.19C illustrates transmit power control according to Embodiment 6 of the present invention; and

FIG.19D illustrates transmit power control according to Embodiment 6 of the present invention.

Best Mode for Carrying out the Invention

With reference now to the attached drawings, embodiments of the present invention will be explained in detail below. In the following explanations, suppose an HSDPA (High Speed Downlink Packet Access) will be used as an example of a downlink high-speedpacket transmission scheme. The HSDPA uses a plurality of channels such as HS-PDSCH (High Speed - Physical Downlink Shared Channel), HS-SCCH (Shared Control Channel of HS-PDSCH), A-DPCH (Associated-Dedicated Physical Channel for HS-PDSCH) and HS-DPCCH (High Speed - Dedicated Physical Control Channel).

The HS-PDSCH is a shared channel in a downlink used for transmission of packets. The HS-SCCH is a shared channel in a downlink and transmits information on resource assignment (TFRI: Transport-format and Resource related Information) and information on H-ARQ control, etc.

The A-DPCH is a dedicated associated channel in uplink and downlink and has the same channel configuration and handover control, etc., as those of the DPCH. The A-DPCH transmits pilot signals and TPC commands, etc. The HS-DPCCH in an uplink transmit an ACK/NACK signal and CQI (Channel Quality Indicator) signal. The CQI signal is a signal indicating a modulation scheme and a coding rate of packet data which can be demodulated at a mobile station apparatus and plays a role of a report value for reporting a downlink channel condition.

(Embodiment 1)

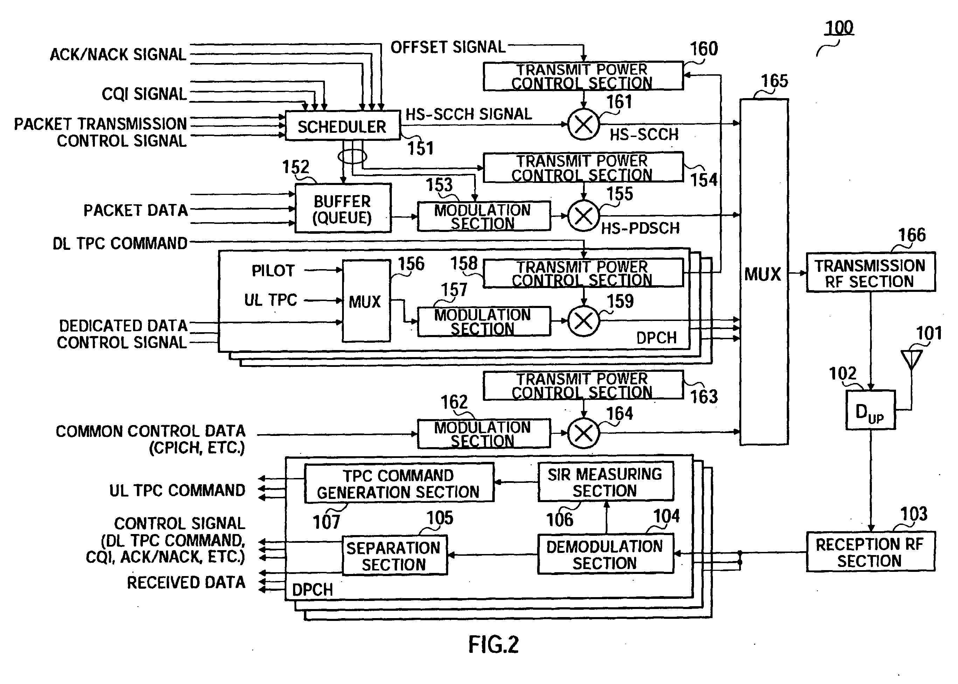

FIG.2 is a block diagram showing a configuration of a base station apparatus according to Embodiment 1 of the present invention. Various components of a base station apparatus 100 in FIG.2 will be explained below.

A duplexer 102 outputs a signal received by an antenna 101 to a reception RF section 103. Furthermore, the duplexer 102 transmits a signal output from a transmission RF section 166 from the antenna 101 by radio.

The reception RF section 103 converts the received signal of a radio frequency output from the duplexer 102 to a baseband digital signal and outputs the signal to a demodulation section 104.

There are as many demodulation sections 104 as mobile station apparatuses with which radio communications are carried out, for performing demodulation processing such as despreading, RAKE combining, error correcting decoding on the received baseband signal and outputting the signal to a separation section 105.

The separation section 105 separates the output signal of the demodulation section 104 into data and a control signal. The control signal separated by the separation section 105 includes DL (Down Link) TPC command, CQI signal and ACK/NACK signal, etc. The CQI signal and ACK/NACK signal are output to a scheduler 151, while the DL TPC command is output to a transmit power control section 158.

There are as many SIR measuring sections 106 as mobile station apparatuses with which radio communications are carried out, for measuring a reception SIR on an uplink according to a desired signal level and interference signal level measured in the process of demodulation and outputs a signal indicating the SIR to a TPC command generation section 107.

There are as many TPC command generation sections 107 as mobile station apparatuses with which radio communications are carried out, for generating a UL (Up Link) TPC command which instructs an increase/decrease of uplink transmit power according to a magnitude relationship between the reception SIR on the uplink and a target SIR.

The scheduler 151 determines a mobile station apparatus to which a packet is transmitted based on a packet transmission control signal, CQI signal from each mobile station apparatus and ACK/NACK signal and outputs information indicating the mobile station apparatus and packet data to be transmitted to a buffer (Queue) 152. Furthermore, the scheduler 151 determines a modulation scheme, coding rate and code multiplexing number based on the CQI signal from the mobile station apparatus and instructs amodulation section 153 on them. Furthermore, the scheduler 151 determines transmit power of packet data based on the ACK/NACK signal from the mobile station apparatus and outputs a signal indicating the transmit power to a transmit power control section 154.

Furthermore, the scheduler 151 outputs a signal (hereinafter referred to as "HS-SCCH signal") to be transmitted to the mobile station apparatus using an HS-SCCH to an amplification section 161. The HS-SCCH signal includes information (TFRI) on a timing for transmitting packet data, coding rate and modulation scheme of the packet data, etc. The configuration of the scheduler 151 will be explained later.

The buffer 152 outputs the packet data for the mobile station apparatus instructed by the scheduler 151 to the modulation section 153.

The modulation section 153 performs error correcting coding, modulation and spreading on the packet data according to instructions of the scheduler 151 and outputs the packet data to an amplification section 155.

The transmit power control section 154 controls an amount of amplification of the amplification section 155 to thereby control the transmit power of the output signal of the modulation section 153 to a value determined by the scheduler 151. The output signal of the amplification section 155 is a signal transmitted using an HS-PDSCH and output to a multiplexing section 165.

There are as manymultiplexing sections 156 as mobile station apparatuses with which radio communications are carried out, for multiplexing pilot signals and UL TPC commands with dedicated data (also including control signals) to be transmitted to each mobile station apparatus and outputting the multiplexed signal to a modulation section 157.

There are as many modulation sections 157 as mobile station apparatuses with which radio communications are carried out, for carrying out error correcting coding, modulation and spreading on the output signal of the multiplexing section 156 and outputting the signal to an amplification section 159.

There are as many transmit power control sections 158 as mobile station apparatuses with which radio communications are carried out, for controlling transmit power of the output signal of the modulation section 157 by controlling the amount of amplification of the amplification section 159 according to a DL TPC command. Furthermore, the transmit power control section 158 outputs a signal indicating a transmit power value to a transmit power control section 160. The signal amplified by the amplification section 159 is a signal transmitted using a DPCH (including A-DPCH) and output to the multiplexing section 165.

The transmit power control section 160 controls transmit power of an HS-SCCH signal output from the scheduler 151 by controlling the amount of amplification of the amplification section 161 with a value obtained by adding an offset to the transmit power value of the transmit power control section 158. The signal amplified by the amplification section 161 is a signal transmitted using an HS-SCCH and output to the multiplexing section 165. The transmit power control section 160 may also correct the offset value according to a retransmission condition, etc.

A modulation section 162 carries out error correcting coding, modulation and spreading on common control data and outputs the control data to an amplification section 164. A transmit power control section 163 controls transmit power of the output signal of the modulation section 162 by controlling the amount of amplification of the amplification section 164. The output signal of the amplification section 164 is a signal transmitted using a CPICH, etc., and output to the multiplexing section 165.

The multiplexing section 165 multiplexes the output signals of the amplification section 155, amplification section 159, amplification section 161 and amplification section 164 and outputs the multiplexed signal to a transmission RF section 166.

The transmission RF section 166 converts the baseband digital signal output from the modulation section 159 to a signal with a radio frequency and outputs the signal to the duplexer 102.

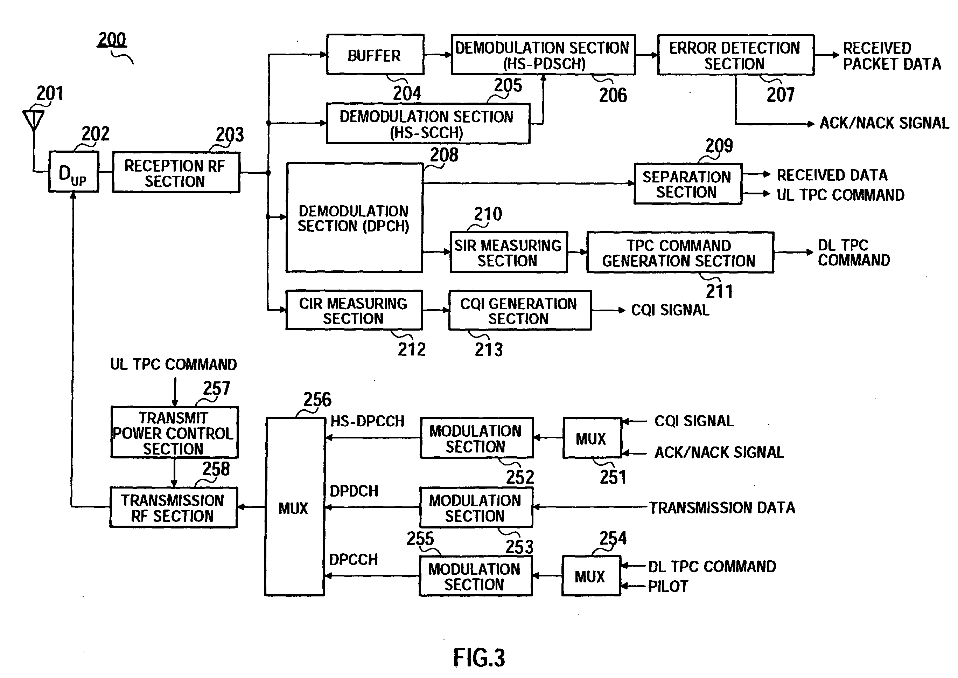

FIG.3 is a block diagram showing a configuration of a mobile station apparatus which carries out radio communications with the base station apparatus shown in FIG.2. A mobile station apparatus 200 in FIG.3 receives dedicated data, common control data, packet data and HS-SCCH signal from the base station apparatus 100. Various components of the mobile station apparatus 200 in FIG.3 will be explained below.

A duplexer 202 outputs the signal received by an antenna 201 to a reception RF section 203. The duplexer 202 also transmits a signal output from a transmission RF section 258 from the antenna 201 by radio.

The reception RF section 203 converts the received signal with the radio frequency output from the duplexer 202 to a baseband digital signal and outputs an HS-PDSCH signal to a buffer 204, outputs an HS-SCCH signal to a demodulation section 205, outputs a DPCH signal to a demodulation section 208 and outputs a shared control channel signal to a CIR (Carrier to Interference Ratio) measuring section 212.

The buffer 204 temporarily stores the HS-PDSCH signal and outputs the signal to a demodulation section 206.

The demodulation section 205 carries out demodulation processing such as despreading, RAKE combining and error correcting decoding on the HS-SCCH signal, acquires information necessary for demodulation of packet data such as an arrival timing of packet data directed to the mobile station apparatus 200, coding rate and modulation scheme of the packet data and outputs the information to the demodulation section 206.

The demodulation section 206 carries out demodulation processing such as despreading, RAKE combining and error correcting decoding on the HS-PDSCH signal stored in the buffer based on the information acquired by the demodulation section 205 and outputs the packet data obtained through demodulation processing to the error detection section 207.

An error detection section 207 carries out error detection on the packet data output from the demodulation section 206 and outputs an ACK signal when no error is detected and a NACK signal when an error is detected to a multiplexing section 251.

The demodulation section 208 carries out demodulation processing such as despreading, RAKE combining and error correcting decoding on the DPCH signal and outputs the DPCH signal to a separation section 209.

The separation section 209 separates the output signal of the demodulation section 208 into data and a control signal. The control signal separated by the separation section 209 includes a UL TPC command, etc. The UL TPC command is output to a transmit power control section 257.

An SIR measuring section 210 measures a reception SIR of the downlink according to a desired signal level and interference signal level measured in the process of demodulation and outputs all the measured reception SIRS to a TPC command generation section 211.

The TPC command generation section 211 generates a DL TPC command according to a magnitude relationship between the reception SIR output from the SIR measuring section 210 and a target SIR and outputs the DL TPC command to a multiplexing section 254.

The CIR measuring section 212 measures a CIR using the common control channel signal from the base station apparatus and outputs the measurement result to a CQI generation section 213. The CQI generation section 213 generates a CQI signal based on the CIR of the signal transmitted from the base station apparatus and outputs the CQI signal to the multiplexing section 251.

The multiplexing section 251 multiplexes the CQI signal and ACK/NACK signal and outputs the multiplexed signal to a modulation section 252. The modulation section 252 carries out error correcting coding, modulation and spreading on the output signal of the multiplexing section 251 and outputs the signal to a multiplexing section 256.

A modulation section 253 carries out error correcting coding, modulation and spreading on the data to be transmitted to the base station apparatus 100 and outputs the data to the multiplexing section 256.

The multiplexing section 254 multiplexes a DL TPC command and pilot signal and outputs the multiplexed signal to a modulation section 255. The modulation section 255 carries out error correcting coding, modulation and spreading on the output signal of the multiplexing section 254 and outputs the output signal to the multiplexing section 256.

The multiplexing section 256 multiplexes the output signals of the modulation section 252, modulation section 253 and modulation section 255 and outputs the multiplexed signal to the transmission RF section 258.

The transmit power control section 257 controls transmit power of the output signal of the multiplexing section 256 by controlling an amount of amplification of the transmission RF section 258 according to a UL TPC command. When the mobile station is connected to a plurality of base station apparatuses, the transmit power control section 257 performs control for increasing transmit power only when all UL TPC commands instruct an increase of transmit power.

The transmission RF section 258 amplifies the baseband digital signal output from the multiplexing section 256, converts the baseband digital signal to a signal with a radio frequency and outputs the signal to the duplexer 102.

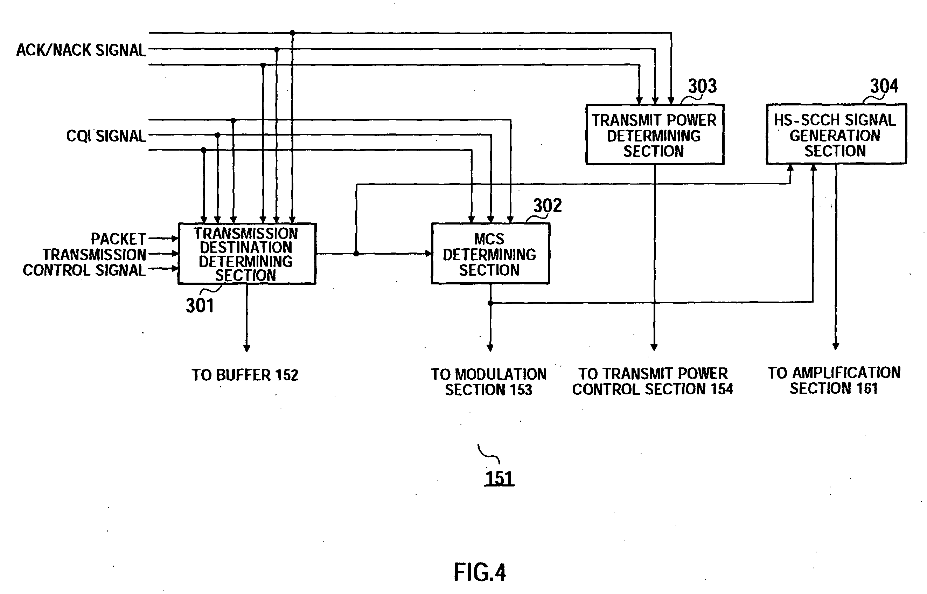

Next, the configuration of the scheduler 151 of the base station apparatus 100 will be explained using FIG. 4.

The scheduler 151 is mainly constructed of a transmission destination determining section 301, an MCS determining section 302, a transmit power determining section 303 and an HS-SCCH signal generation section 304.

The transmission destination determining section 301 selects each mobile station apparatus which becomes a candidate to which a packet is transmitted, using a packet transmission control signal and determines a mobile station apparatus to which a packet is transmitted based on the CQI signal from the selected mobile station apparatus. For example, a mobile station apparatus having the best reception quality is determined as the packet transmission destination based on the CQI signal. Then, the transmission destination determining section 301 outputs information indicating the mobile station apparatus designated as the destination to the buffer 152, MCS determining section 302 and HS-SCCH signal generation section 304. The transmission destination determining section 301 instructs the buffer 152 to transmit a new packet when an ACK signal is received and to retransmit the previously transmitted packet when an NACK signal is received.

The MCS determining section 302 selects an MCS (determines the modulation scheme, coding rate and code multiplexing number) based on the CQI signal of the mobile station apparatus, instructs the modulation section 153 on the MCS and inputs the MCS to the HS-SCCH signal generation section 304.

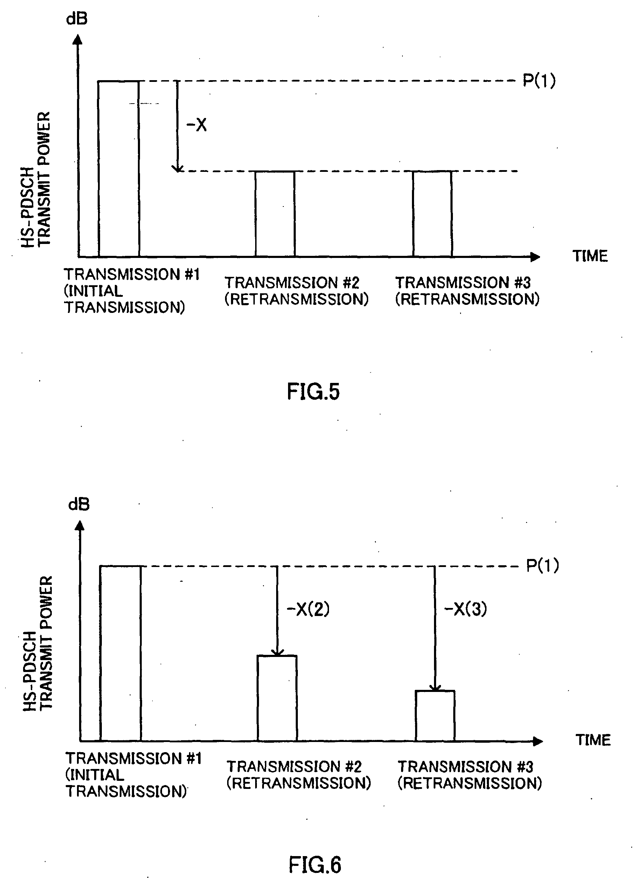

The transmit power determining section 303 applies different transmit powers of a packet between when an ACK signal is received and when a NACK signal is received from the mobile station apparatus, and lowers the reception quality (e.g., Ec/N0, SIR, CIR, etc.) of a retransmission packet at the mobile station apparatus than the reception quality of an initial transmission packet. More specifically, when anACK signal is received, the transmit power determining section 303 determines the transmit power of the initial transmission packet (transmission #1) to be transmitted next to a predetermined value P(1) [dB] as shown in FIG.5. On the other hand, when a NACK signal is received in response to the initial transmission packet (transmission #1), the transmit power of the first retransmission packet (transmission #2) is set to a value lower than the transmit power P(1) [dB] of the initial transmission packet (transmission #1) by a predetermined value X [dB] as shown in FIG.5. Furthermore, when another NACK signal is received in response to the first retransmission packet (transmission #2), the transmit power of the second retransmission packet (transmission #3) is also set to a value lower than the transmit power P(1) [dB] of the initial transmission packet (transmission #1) by the predetermined value X [dB] as shown in FIG.5. That is, the transmit power of both the first retransmission packet (transmission #2) and second retransmission packet (transmission #3) is set to the value lower than the transmit power P(1) [dB] of the initial transmission packet (transmission #1) by the predetermined value X [dB]. In this way, the transmit power determining section 303 sets the transmit power of a retransmission packet for an HS-PDSCH to a value lower than the transmit power of an initial transmission packet for an HS-PDSCH, and thereby lowers the reception quality of the retransmission packet at the mobile station apparatus compared to the reception quality of the initial transmission packet. Then, the transmit power determining section 303 outputs a signal indicating the determined transmit power to the transmit power control section 154. Following this indication, the transmit power control section 154 controls the transmit power of the retransmission packet to a value lower than the transmit power of the initial transmission packet by X [dB] .

The HS-SCCH signal generation section 304 generates an HS-SCCH signal for the mobile station apparatus including the MCS selected by the MCS determining section 302 and outputs the HS-SCCH signal to the amplification section 161.

Thus, according to this embodiment, the transmit power of a retransmission packet is lowered compared to the transmit power of an initial transmission packet, and the reception quality of the retransmission packet at the mobile station apparatus is lower than the reception quality of the initial transmission packet, and therefore it is possible to reduce interference in the radio communication system and save the consumption of transmit power resources. Furthermore, the mobile station apparatus has already successfully received a certain degree of necessary data through the initial transmission packet, and can thereby improve the error rate characteristic by carrying out an H-ARQ even if the reception quality of a retransmission packet is lower. That is, the mobile station apparatus which carries out an H-ARQ uses a retransmission packet as a supplement to an initial transmission packet, and therefore the degradation of reception quality of the retransmission packet constitutes no particular problem in improving the error rate characteristic.

(Embodiment 2)

With an H-ARQ, the degree of contribution of a retransmission packet to improvement of an error rate decreases as a retransmission count increases. That is, reception quality of a retransmission packet at a mobile station apparatus required for a second retransmission is lower than that for a first retransmission. Therefore, the base station apparatus according to this embodiment changes the width of reduction of transmit power of a retransmission packet with respect to an initial transmission packet according to a retransmission count. That is, transmit power is decreased as the retransmission count increases.

In the base station apparatus according to this embodiment, upon reception of an ACK signal, the transmit power determining section 303 shown in FIG. 4 determines the transmit power of an initial transmission packet (transmission #1) to be transmitted next to a predetermined value P(1) [dB] as shown in FIG. 6. On the other hand, upon reception of a NACK signal in response to the initial transmission packet (transmission #1), the transmit power determining section 303 determines the transmit power of the first retransmission packet (transmission #2) to a value lower than the transmit power P(1) [dB] of the initial transmission packet (transmission #1) by a predetermined value X(2) [dB] as shown in FIG. 6. Furthermore, when a further NACK signal is received in response to the first retransmission packet (transmission #2), the transmit power of the second retransmission packet (transmission #3) is set to a value lower than the transmit power P(1) [dB] of the initial transmission packet (transmission #1) by a predetermined value X(3) [dB] (>X(1) [dB]) as shown in FIG. 5. That is, the transmit power of a retransmission packet is decreased gradually as the retransmission count increases.

In this way, by gradually decreasing the transmit power of a retransmission packet as the retransmission count increases, it is possible to further decrease interference in the radio communication system and further save consumption of transmit power resources.

(Embodiment 3)

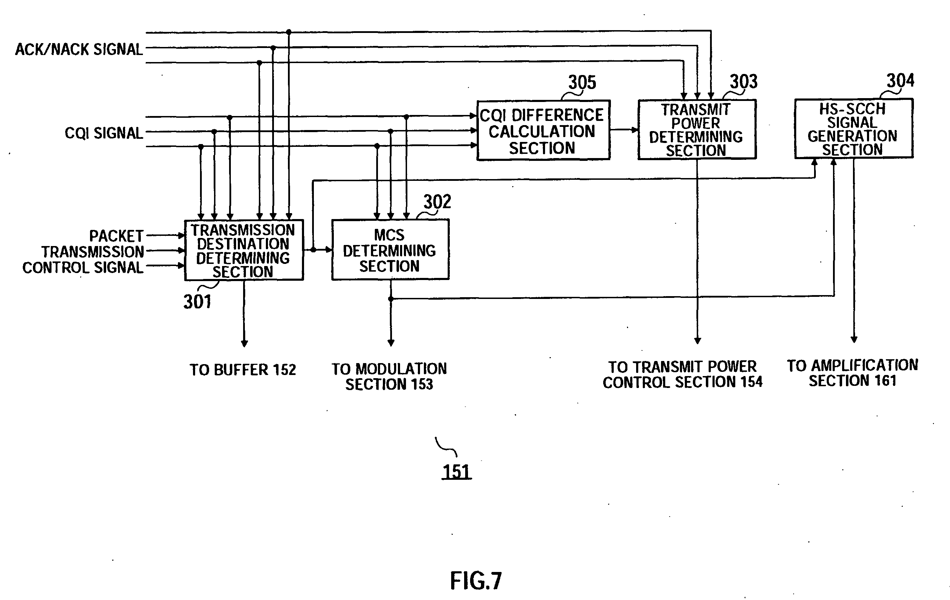

This embodiment will explain a case where transmit power control is performed on a retransmission packet with consideration given to a variation in a downlink channel condition. FIG.7 is a block diagram showing a configuration of a scheduler of a base station apparatus according to this embodiment and has a configuration with a CQI difference calculation section 305 added to the configuration in FIG.4.

A CQI difference calculation section 305 calculates a difference between a CQI value at the time of initial transmission and a CQI value at the time of retransmission based on the input CQI signals and inputs this CQI value difference to a transmit power determining section 303. The transmit power determining section 303 determines transmit power of a retransmission packet using the input CQI value difference.

Since the mobile station apparatus transmits a CQI signal corresponding to a combination of the modulation scheme and coding rate determined according to the downlink channel quality to the base station apparatus, the CQI signal can be said to indicate downlink channel quality. Furthermore, the CQI signal is expressed with a CQI value from '1' to '30' according to the downlink channel quality, which indicates that the downlink channel quality improves as the value increases. Furthermore, the CQI value difference is substantially the same as the difference in dB units. Therefore, when the CQI difference calculation section 305 calculates the difference between a CQI value at the time of initial transmission and a CQI value at the time of retransmission, it is possible to calculate the difference between the downlink channel quality at the time of initial transmission packet transmission and the downlink channel quality at the time of retransmission packet transmission in dB units.

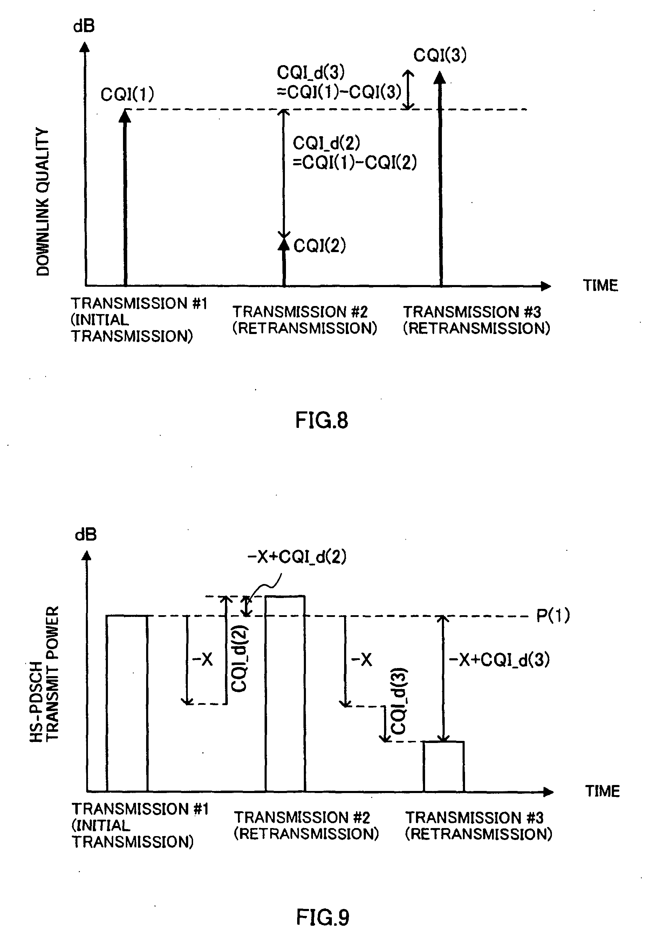

This will be explained more specifically using FIG. 8 to FIG.10.

First, as shown in FIG.8, the CQI difference calculation section 305 calculates a difference between a CQI value at the time of initial transmission and a CQI value at the time of retransmission. That is, a difference CQI_d(2) between CQI (1) which is the CQI value of the initial transmission packet (transmission #1) and CQI (2) which is the CQI value of the first retransmission packet (transmission #2) is calculated from the following Expression (1):

$$CQI\_d(2)=CQI(1)-CQI(2) \qquad (1)$$

Here, the downlink channel quality at the time of first retransmission (transmission #2) is worse than that at the time of initial transmission (transmission #1), and therefore CQI(2) has a value smaller than that of CQI(1) and CQI_d(2) results in a positive value.

Likewise, a difference CQI_d(3) between CQI (1) which is the CQI value of the initial transmission packet (transmission #1) and CQI(3) which is the CQI value of the second retransmission packet (transmission #3) is calculated from the following Expression (2):

$$CQI\_d(3)=CQI(1)-CQI(3) \qquad (2)$$

Here, the downlink channel quality at the time of second retransmission (transmission #3) is better than the downlink channel quality at the time of initial transmission (transmission #1), and therefore CQI (3) has a greater value than CQI(1) and CQI_d(3) results in a negative value.

Then, the transmit power determining section 303 determines transmit power of a retransmission packet as shown in FIG.9 according to the CQI value difference calculated by the CQI difference calculation section 305. That is, if the transmit power at the time of initial transmission (transmission #1) is P(1) [dB], the transmit power value P(2) of the first retransmission packet (transmission #2) is given by the following Expression (3) and the transmit power value P(3) of the second retransmission packet (transmission #3) is given by the following Expression (4). X [dB] in Expressions (3) and (4) is the same as the predetermined value X [dB] explained in Embodiment 1.

$$P(2)=P(1)-X+CQI\_d(2) \qquad (3)$$

$$P(3)=P(1)-X+CQI\_d(3) \qquad (4)$$

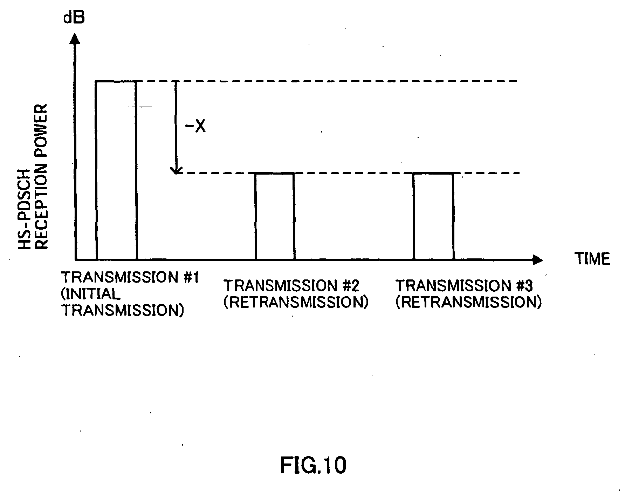

Since the transmit power determining section 303 determines the transmit power of a retransmission packet according to the CQI value difference between initial transmission and retransmission as shown in Expressions (3) and (4), that is, the difference between the downlink channel quality at the time of initial transmission packet transmission and the downlink channel quality at the time of retransmission packet transmission, even if the downlink channel quality changes between the time of initial transmission and the time of retransmission, as shown in FIG.10, reception power (reception quality) of a retransmission packet at the mobile station apparatus in the HS-PDSCH always has a value lower than the reception power (reception quality) of the initial transmission packet by a predetermined value X [dB].

In this way, according to this embodiment, even if the downlink channel quality changes between the time of initial transmission and the time of retransmission, the transmit power of a retransmission packet is determined with consideration given to the change in the downlink channel quality, and therefore it is possible to always keep the reception quality of the retransmission packet at the mobile station apparatus lower than the reception quality of the initial transmission packet by a predetermined value.

(Embodiment 4)

This embodiment will explain a case where an IR type H-ARQ is used as the H-ARQ and transmit power of a retransmission packet is lowered by the proportion of the gain of the IR type H-ARQ over the CC type H-ARQ.

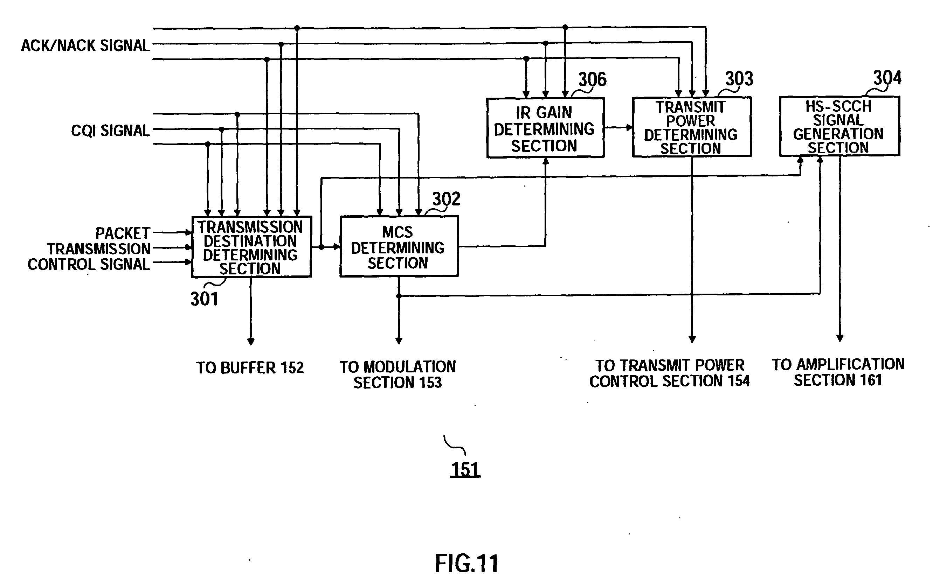

FIG.11 is a block diagram showing a configuration of a scheduler of a base station apparatus according to this embodiment and adopts a configuration with an IR gain determining section 306 added to the configuration in FIG.4.

The IR gain determining section 306 receives a signal indicating a modulation scheme determined by an MCS determining section 302. Furthermore, the IR gain determining section 306 receives an ACK/NACK signal. When a NACK signal is input (that is, in the case of retransmission), the IR gain determining section 306 calculates a gain (IR gain) of the IR type H-ARQ over the CC type H-ARQ and inputs a signal indicating the IR gain to a transmit power determining section 303. The transmit power determining section 303 determines transmit power of a retransmission packet using the input IR gain.

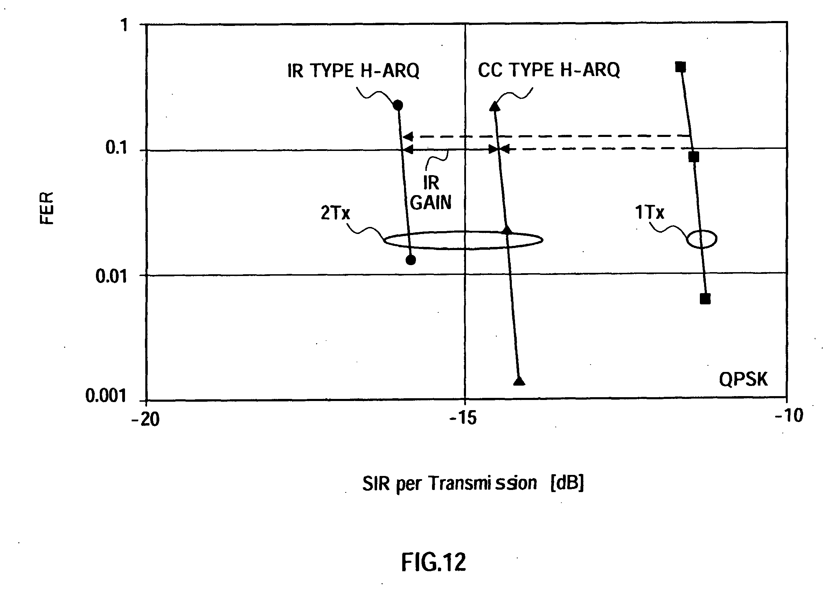

This will be explained more specifically using FIG.12 to FIG.14 below.

First, the IR gain will be explained. FIG.12 is a graph showing a relationship between an SIR and FER (Frame Error Rate) per transmission when the modulation scheme is QPSK. This graph shows a reception SIR obtained when transmission is performed only once (1 Tx) and reception SIR obtained per transmission when transmission is performed twice with the same power (2 Tx). Since an H-ARQ is performed here, performing transmission twice (2 Tx) can reduce a required reception SIR per transmission at a mobile station apparatus compared to performing transmission only once (1 Tx). Furthermore, the SIR of the IR type H-ARQ can be further reduced compared to the SIR of the CC type H-ARQ and the difference in these SIRs is an IR gain. This IR gain increases as the retransmission count increases. However, as the retransmission count increases, the coding rate at the mobile station apparatus gradually decreases and the IR gain becomes substantially constant after all coded bits of systematic bits and parity bits are received by the mobile station apparatus. The IR gain is obtained not only in a coding scheme (turbo coding) in which coded bits are divided into systematic bits and parity bits but also in convolutional coding, etc.

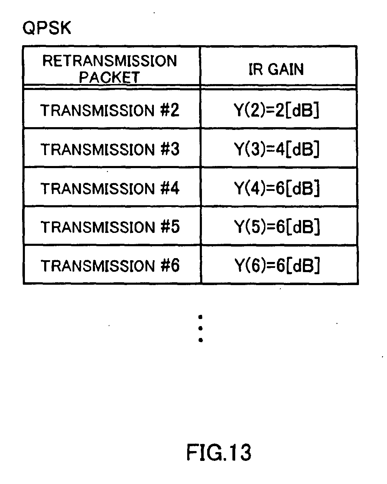

Based on the graph shown in FIG.12, the IR gain determining section 306 sets a table as shown in FIG.13 showing the correspondence between a retransmission count and IR gain for each modulation scheme and the IR gain determining section 306 determines an IR gain according to a retransmission count with reference to this table. For example, when the modulation scheme determined y the MCS determining section 302 is QPSK and in the case of a first retransmission packet (transmission #2), the IR gain is determined as Y(2) =2 [dB]. Furthermore, when the modulation scheme determined by the MCS determining section 302 is QPSK and in the case of a second retransmission packet (transmission #3), the IR gain is determined as Y(3)=4[dB]. In the table shown in FIG.13, the IR gain remains constant after the third retransmission packet (transmission #4).

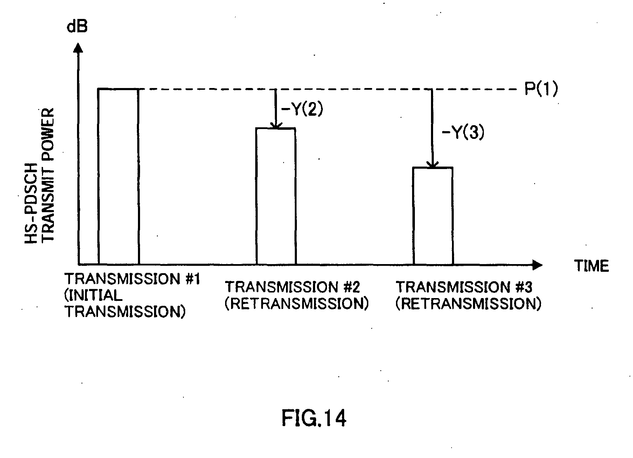

Then, the transmit power determining section 303 determines transmit power of a retransmission packet as shown FIG.14 according to the IR gain calculated by the IR gain determining section 306. That is, when a NACK signal is received in response to an initial transmission packet (transmission #1), the transmit power of the first retransmission packet (transmission #2) is determined as a value lower than the transmit power P(1) [dB] of the initial transmission packet (transmission #1) by Y(2)=2 [dB] as shown in FIG.14. Furthermore, when a NACK signal is received in response to the first retransmission packet (transmission #2), the transmit power of the second retransmission packet (transmission #3) is determined as a value lower than the transmit power P(1) [dB] of the initial transmission packet (transmission #1) by Y(3)=4[dB] as shown in FIG.14. In this way, as the retransmission count increases, the IR gain increases, and therefore transmit power of a retransmission packet gradually decreases. However, in the table shown in FIG.13, the IR gain remains constant after the third retransmission packet (transmission #4), and therefore transmit power becomes constant after the third retransmission packet.

Thus, according to this embodiment, the amount of decrease of transmit power of a retransmission packet corresponds to an IR gain corresponding to a retransmission count, and therefore when an IR type H-ARQ is used as the H-ARQ, it is possible to keep reception quality at the mobile station apparatus to the reception quality higher than when a CC type H-ARQ is used, decrease interference in a radio communication system and save the consumption of transmit power resources.

(Embodiment 5)

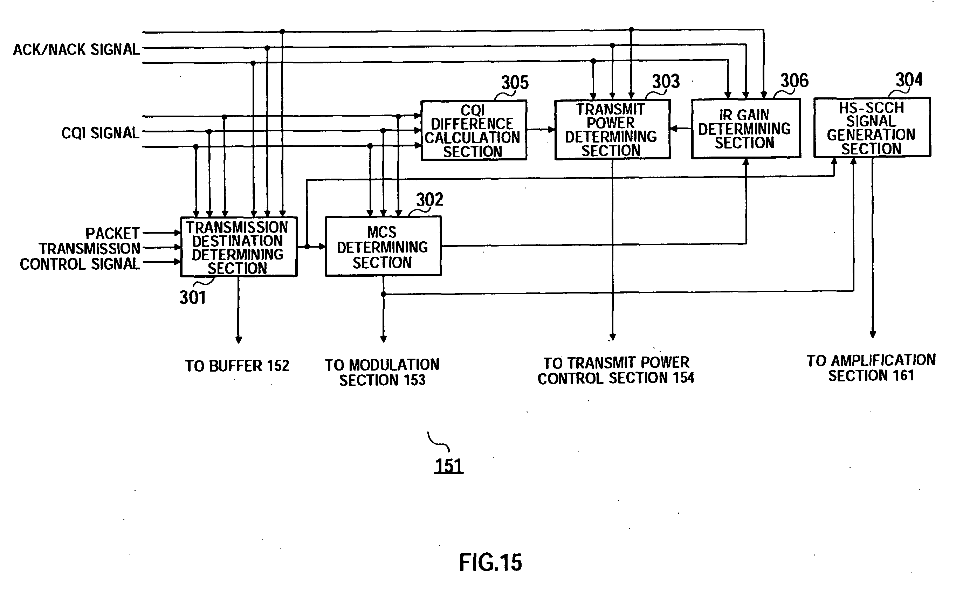

This embodiment will explain a case where an IR type H-ARQ is used as the H-ARQ and transmit power of a retransmission packet is controlled in consideration of a variation in the downlink channel condition. FIG.15 is a block diagram showing a configuration of a scheduler of a base station apparatus according to this embodiment and adopts a configuration with a CQI difference calculation section 305 and IR gain determining section 306 added to the configuration in FIG.4. The CQI difference calculation section 305 shown in FIG.15 is the same as the CQI difference calculation section 305 shown in FIG.7 and the IR gain determining section 306 shown in FIG.15 is the same as the IR gain determining section 306 shown in FIG.11, and so explanations thereof will be omitted here. According to this embodiment, the transmit power determining section 303 determines transmit power of a retransmission packet using the CQI value difference calculated at the CQI difference calculation section 305 and the IR gain determined by the IR gain determining section 306.

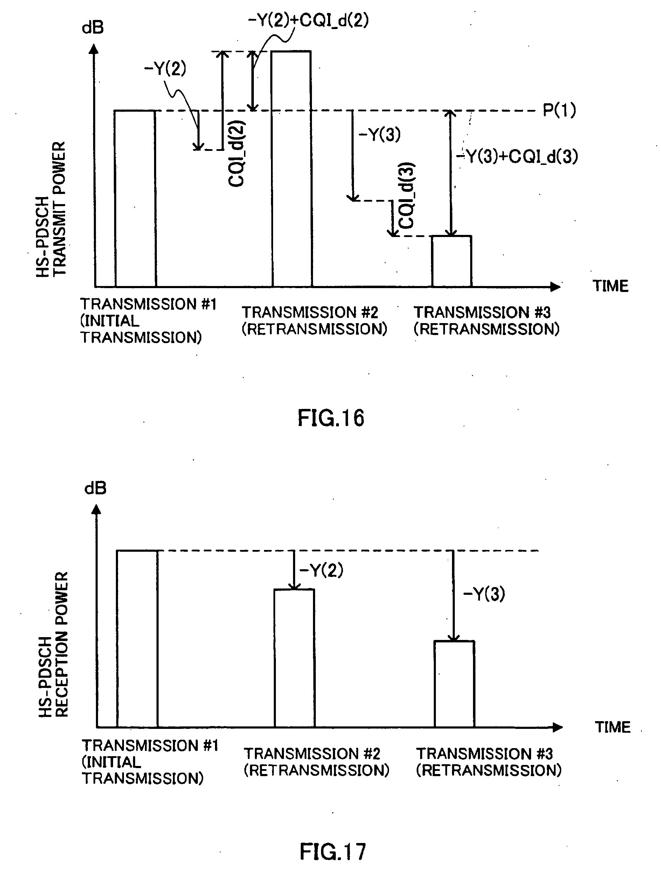

This will be explained more specifically using FIG.16 and FIG.17 below.

As shown in FIG.16, if the transmit power at the time of initial transmission (transmission #1) is P(1) [dB], the transmit power value P(2) of the first retransmission packet (transmission #2) is given by the following Expression (5) and the transmit power value P(3) of the second retransmission packet (transmission #3) is given by the following Expression (6). In the following Expressions (5) and (6), CQI_d(2) and CQI_d(3) are the same as CQI_d(2) and CQI_d(3) explained in Embodiment 3 and Y(2) and Y(3) are the same as Y(2) and Y(3) explained in Embodiment 4.

$$P(2)=P(1)-Y(2)+CQI\_d(2) \qquad (5)$$

$$P(3)=P(1)-Y(3)+CQI\_d(3) \qquad (6)$$

Since as shown in Expression (5) and (6), the transmit power determining section 303 determines the transmit power of a retransmission packet according to a difference in the CIQ value at the time of initial transmission and at the time of retransmission (that is, difference between downlink channel quality at the time of initial transmission packet transmission and downlink channel quality at the time of retransmission packet transmission) and the IR gain, when an IR type H-ARQ is used as the H-ARQ, even if the downlink channel quality changes at the time of initial transmission and at the time of retransmission, the reception power (reception quality) of a retransmission packet decreases as the retransmission count increases in the HS-PDSCH at the mobile station apparatus as shown in FIG.17.

Thus, according to this embodiment, when an IR type H-ARQ is used as the H-ARQ, even if the downlink channel quality changes at the time of initial transmission and at the time of retransmission, the transmit power of a retransmission packet is determined in consideration of the change in the downlink channel quality and IR gain, and therefore it is possible to always keep the reception quality of a retransmission packet at the mobile station apparatus lower than the reception quality of an initial transmission packet.

(Embodiment 6)

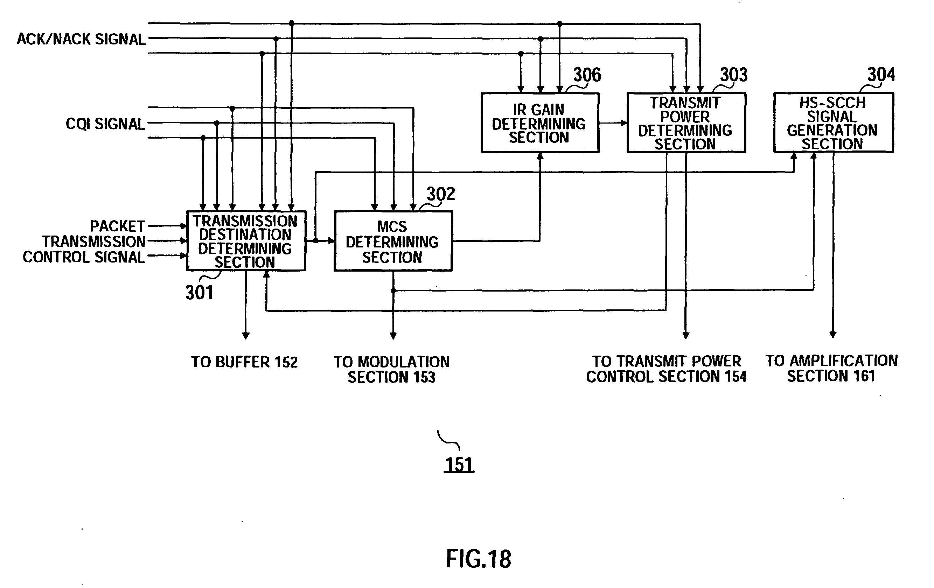

This embodiment will explain a case where extra transmit power resources produced by reducing transmit power of a retransmission packet are distributed to other packets. FIG.18 is a block diagram showing a configuration of a scheduler of a base station apparatus according to this embodiment and adopts a configuration with an IR gain determining section 306 added to the configuration in FIG.4. The IR gain determining section 306 shown in FIG.18 is the same as the IR gain determining section 306 shown in FIG.11, and so explanations thereof will be omitted.

In this embodiment, a transmit power determining section 303 determines transmit power of a retransmission packet using an IR gain determined by the IR gain determining section 306 and outputs a signal indicating the determined transmit power to a transmit power control section 154. Furthermore, the transmit power determining section 303 knows a total amount (total transmit power) of transmit power resources beforehand, subtracts the determined transmit power from this total transmit power to calculate an amount of extra transmit power resources (extra transmit power). Then, the transmit power determining section 303 inputs a signal indicating the extra transmit power to a transmission destination determining section 301.

The transmission destination determining section 301 determines one mobile station apparatus as the packet transmission destination, and then adds other mobile station apparatuses as the packet transmission destinations when there is extra transmit power. That is, extra transmit power is distributed to other packets to be transmitted to the other mobile station apparatuses. When there is extra transmit power, this causes a plurality of different packets for a plurality of mobile station apparatuses to be code-multiplexed and transmitted simultaneously.

Or after one mobile station apparatus is determined as the packet transmission destination, if there is extra transmit power, the transmission destination determining section 301 increases the number of packets to be transmitted to the one mobile station apparatus. That is, the transmission destination determining section 301 distributes the extra transmit power to other packets to be transmitted to the same mobile station apparatus. In this way, when there is extra transmit power, a plurality of different packets for the same mobile station apparatus is code-multiplexed and transmitted simultaneously.

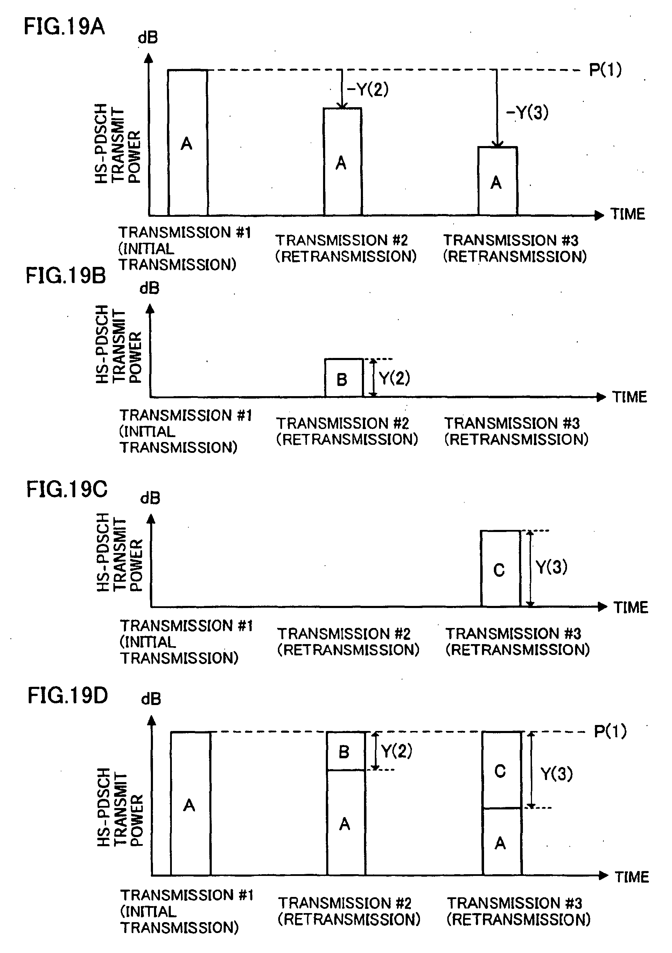

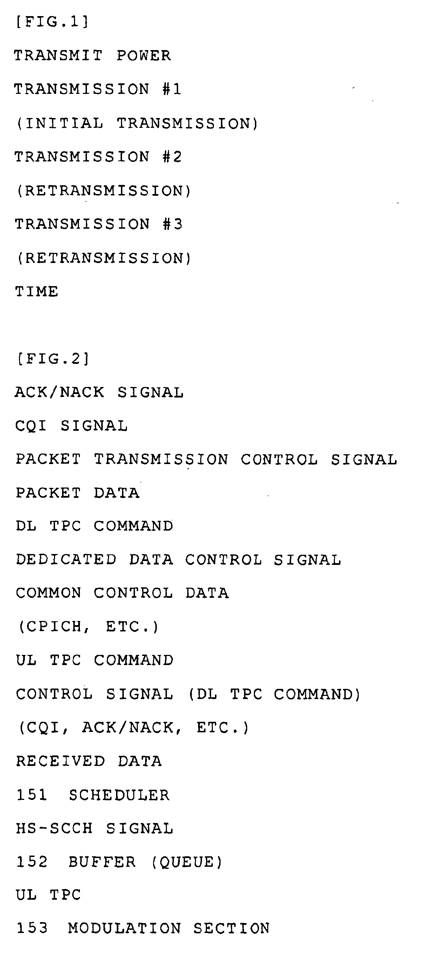

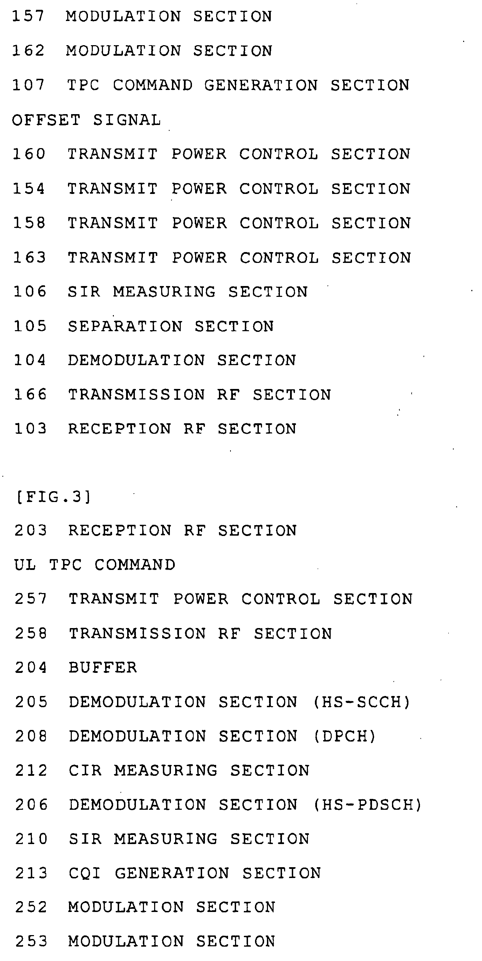

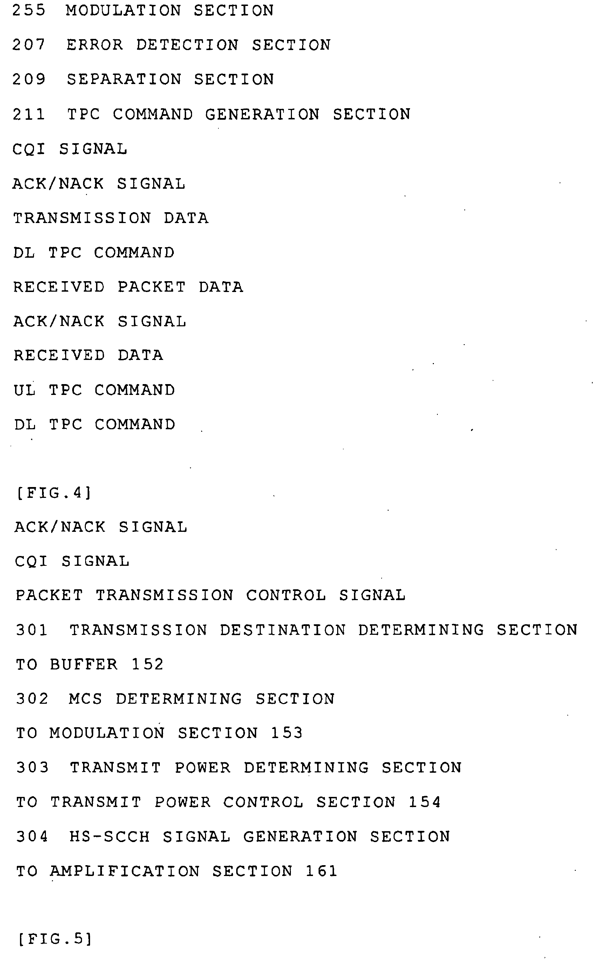

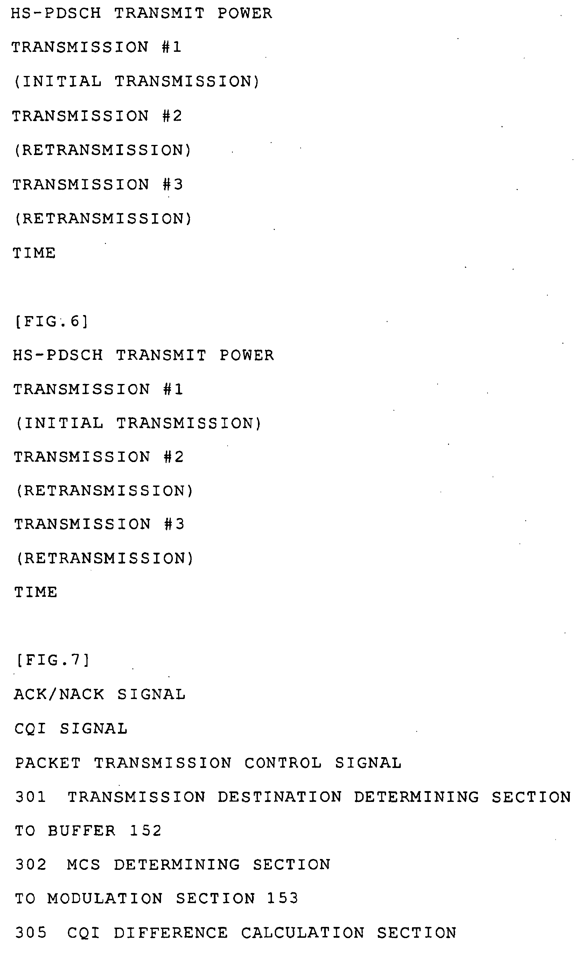

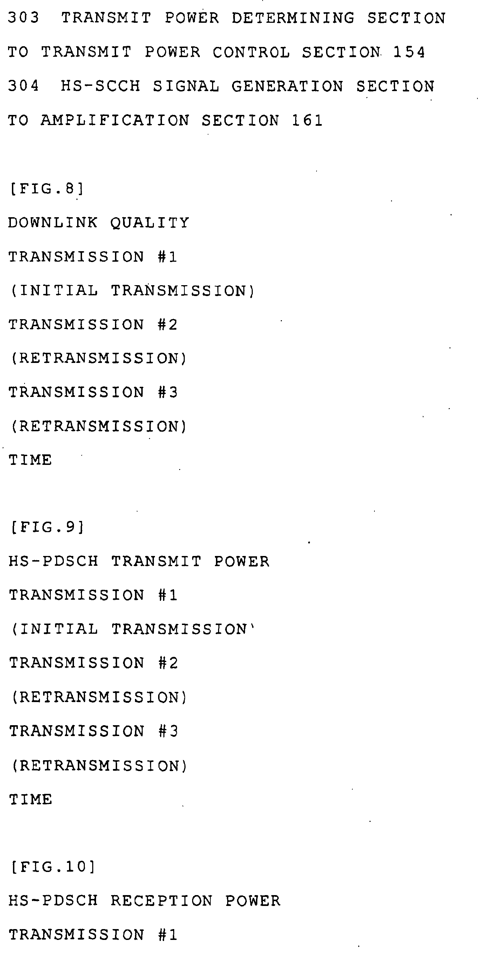

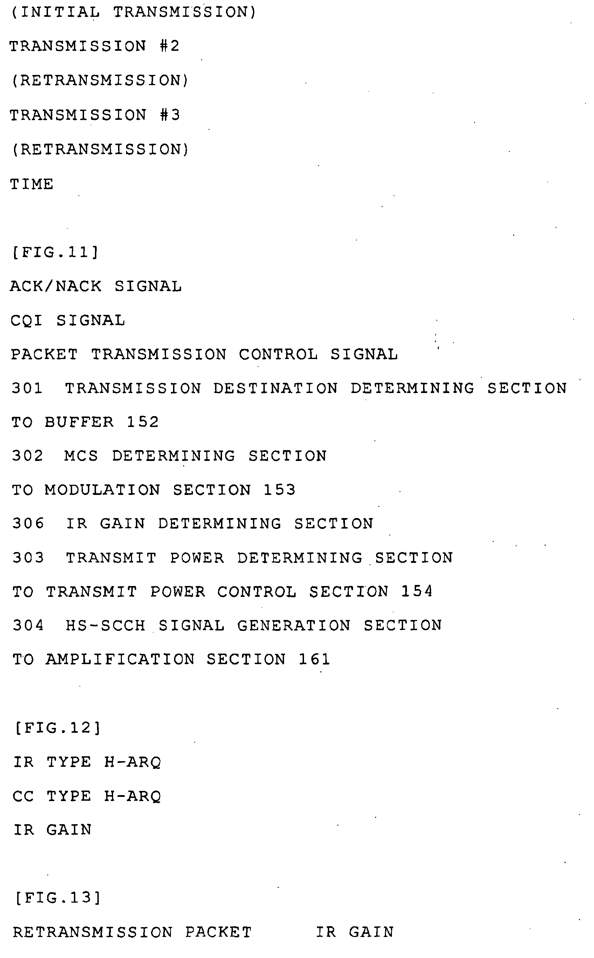

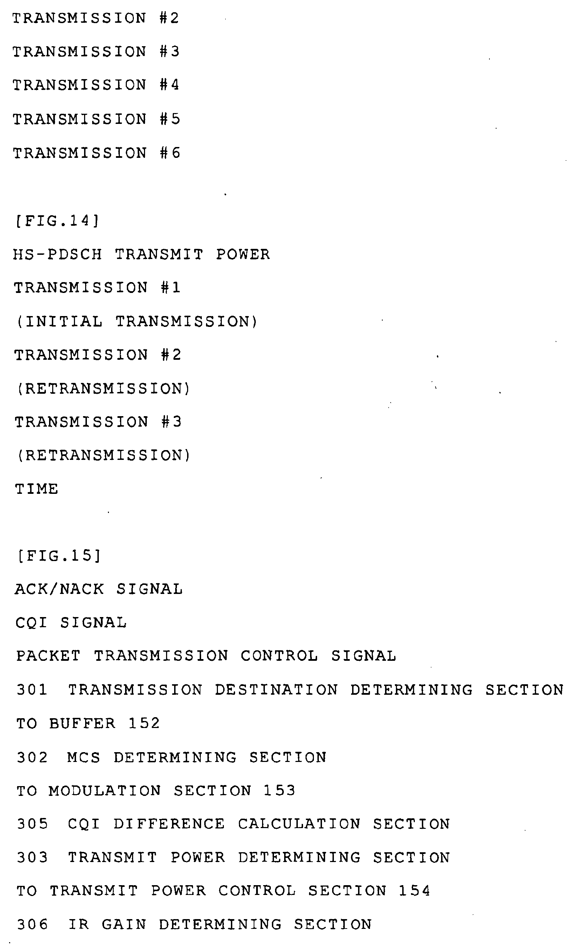

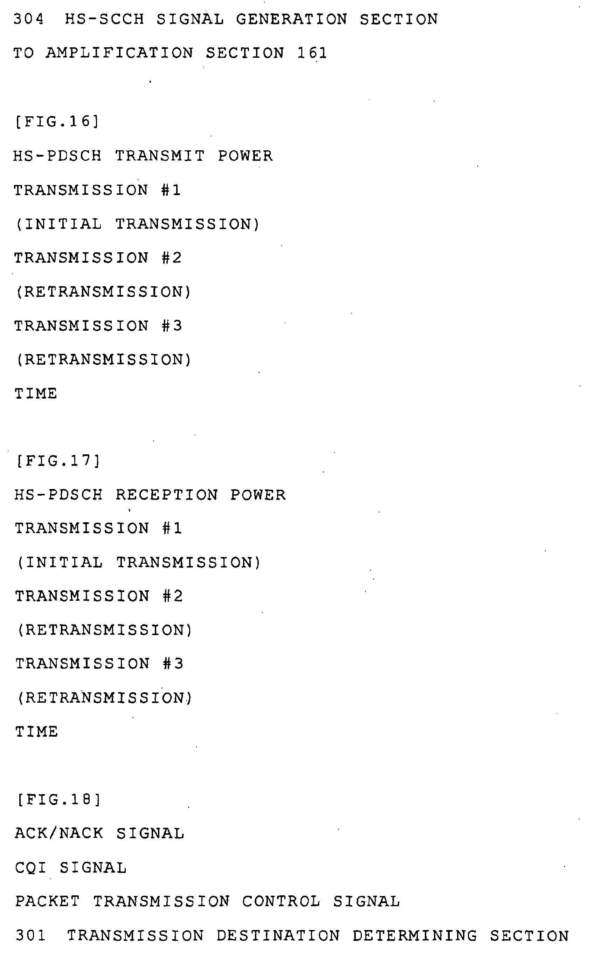

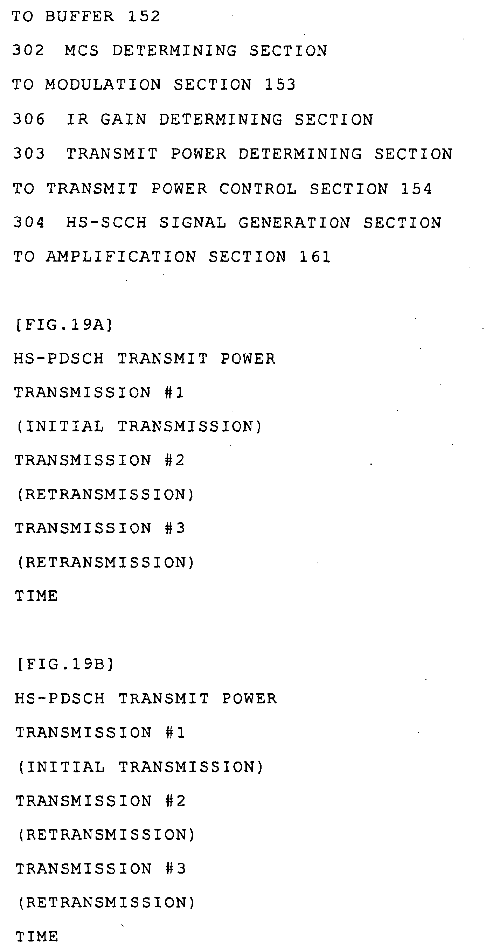

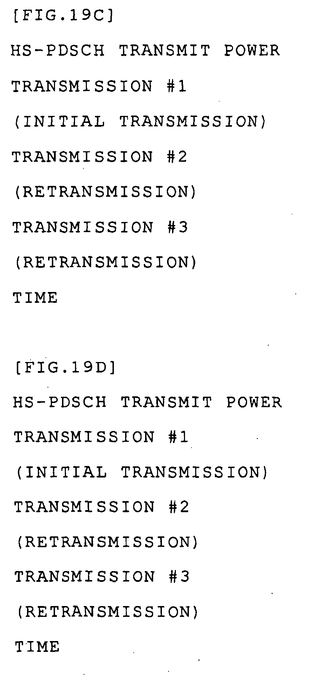

A case where extra transmit power is distributed to other packets to be transmitted to other mobile station apparatus will be explained as an example more specifically using FIGs.19A to 19D. Here, suppose there are three mobile station apparatuses A to C. FIG.19A shows transmit power of an HS-PDSCH distributed to a mobile station apparatus A, FIG.19B shows transmit power of an HS-PDSCH distributed to a mobile station apparatus B, FIG.19C shows transmit power of an HS-PDSCH distributed to a mobile station apparatus C and FIG.19D shows total transmit power of an HS-PDSCH distributed to the mobile station apparatuses A to C. Here, the transmit power for the mobile station apparatus A is determined in the same way as for Embodiment 4.

Suppose the mobile station apparatus A uses all of the total transmit power at initial transmission (transmission #1) (FIG.19A). Therefore, it is not possible to code-multiplex the other mobile station apparatuses B, C at the initial transmission (transmission #1) (FIGs. 19B to D).

Next, at a first retransmission (transmission #2), the transmit power distributed to the mobile station apparatus A is decreased by Y(2) from that at the time of initial transmission (FIG.19A). That is, extra transmit power Y(2) is produced. This extra transmit power Y(2) is distributed to the mobile station apparatus B (FIG. 19B). Therefore, at the first retransmission (transmission #2), the packet to the mobile station apparatus A and the packet to the mobile station apparatus B are code-multiplexed and transmitted (FIG.19D).

Next, at a second retransmission (transmission #3), the transmit power to be distributed to the mobile station apparatus A is decreased from that at the time of initial transmission by Y(3) (FIG.19A). That is, extra transmit power Y(3) is produced. This extra transmit power Y(3) is distributed to the mobile station apparatus C (FIG.19C). Therefore, at the second retransmission (transmission #3), the packet to the mobile station apparatus A and the packet to the mobile station apparatus C are code-multiplexed and transmitted (FIG. 19D).

In this way, by distributing extra transmit power to other packets to the other mobile station apparatuses, the total transmit power of an HS-PDSCH signal transmitted by the base station apparatus always becomes constant (FIG.19D). That is, according to this embodiment, it is possible to effectively use transmit power resources. It is also possible to increase the code-multiplexing number of packets and thereby improve throughput.

This embodiment uses Embodiment 3 to determine transmit power, but can also use any one of Embodiments 1 to 5.

As described above, according to the present invention, when an H-ARQ is used for downlink high-speed packet transmission, it is possible to perform appropriate transmit power control over a retransmission packet to effectively use transmit power resources and reduce interference in a radio communication system.

This application is based on the Japanese Patent Application No. 2002-337208 filed on November 20, 2002, entire content of which is expressly incorporated by reference herein.

**Claims**

**1.** A base station apparatus comprising:

a transmit power determining section that, out of an initial transmission packet and a retransmission packet to be transmitted to a mobile station apparatus on a downlink, sets transmit power of the retransmission packet to a transmit power value so that the reception quality of the retransmission packet at the mobile station apparatus is lower than the reception quality of the initial transmission packet at the mobile station apparatus; and

a control section that controls the transmit power of the retransmission packet to the transmit power value determined by said transmit power determining section.

**2.** The base station apparatus according to claim 1, wherein said transmit power determining section sets the transmit power value of the retransmission packet to a value lower than the transmit power value of the initial transmission packet.

**3.** The base station apparatus according to claim 2, wherein said transmit power determining section sets the transmit power value of the retransmission packet to a lower value as a retransmission count increases.

**4.** The base station apparatus according to claim 1, further comprising a calculation section that calculates a difference between downlink channel quality at the time of the initial transmission packet transmission and downlink channel quality at the time of the retransmission packet transmission,

wherein said transmit power determining section determines the transmit power value of the retransmission packet according to the difference calculated by said calculation section.

**5.** The base station apparatus according to claim 1, further comprising a gain determining section that determines a gain of an IR type hybrid ARQ over a CC type hybrid ARQ,

wherein said transmit power determining section determines the transmit power value of the retransmission packet according to the gain determined by said gain determining section.

**6.** The base station apparatus according to claim 1, further comprising a distribution section that distributes extra transmit power resources produced by said transmit power determining section lowering the transmit power of the retransmission packet to a packet other than the retransmission packet.

**7.** A method of controlling transmit power of a retransmission packet comprising:

a transmit power determining step of setting transmit power of a retransmission packet, out of an initial transmission packet and the retransmission packet to be transmitted to a mobile station apparatus on a downlink, to a transmit power value so that the reception quality of the retransmission packet at the mobile station apparatus is lower than the reception quality of the initial transmission packet at the mobile station apparatus; and
a control step of controlling the transmit power of the retransmission packet to the transmit power value determined in said transmit power determining step.

**Amended claims under Art. 19.1 PCT**

1. (Amended) A base station apparatus comprising:

    a transmit power determining section that, out of an initial transmission packet and a retransmission packet to be transmitted to a mobile station apparatus on a downlink, sets a transmit power of the retransmission packet to a transmit power value so that a reception quality of the retransmission packet at the mobile station apparatus is lower than the reception quality of the initial transmission packet at the mobile station apparatus;
    a control section that controls the transmit power of the retransmission packet to the transmit power value set by said transmit power determining section; and
    a distribution section that distributes extra transmit power found from the transmit power value set by said transmit power determining section and a total transmit power to a packet other than the retransmission packet.

2. The base station apparatus according to claim 1, wherein said transmit power determining section sets the transmit power value of the retransmission packet to a value lower than the transmit power value of the initial transmission packet.

3. The base station apparatus according to claim 2, wherein said transmit power determining section sets the transmit power value of the retransmission packet to a lower value as a retransmission count increases.

4. The base station apparatus according to claim 1, further comprising a calculation section that calculates a difference between downlink channel quality at the time of the initial transmission packet transmission and downlink channel quality at the time of the retransmission packet transmission,
    wherein said transmit power determining section determines the transmit power value of the retransmission packet according to the difference calculated by said calculation section.

5. The base station apparatus according to claim 1, further comprising a gain determining section that determines a gain of an IR type hybrid ARQ over a CC type hybrid ARQ,
    wherein said transmit power determining section determines the transmit power value of the retransmission packet according to the gain determined by said gain determining section.

6. (Canceled)

7. (Amended) A method of controlling transmit power of a retransmission packet comprising:

    a transmit power determining step of setting a transmit power of a retransmission packet, out of an initial transmission packet and the retransmission packet to be transmitted to a mobile station apparatus on a downlink, to a transmit power value so that a reception quality of the retransmission packet at the mobile station apparatus is lower than the reception quality of the initial transmission packet at the mobile station apparatus;
    a control step of controlling the transmit power of the retransmission packet to the transmit power value set in said transmit power determining step; and
    a distribution step of distributing extra transmit power found from the transmit power value set in said transmit power determining step and a total transmit power to a packet other than the retransmission packet.

PRIOR ART
FIG.1

FIG.2

EP 1 519 498 A1

FIG.3

EP 1 519 498 A1

FIG.4

EP 1 519 498 A1

FIG.5

FIG.6

FIG.7

EP 1 519 498 A1

FIG.8

FIG.9

FIG.10

FIG.11

FIG.12

QPSK

| RETRANSMISSION PACKET | IR GAIN |
|---|---|
| TRANSMISSION #2 | Y(2)=2[dB] |
| TRANSMISSION #3 | Y(3)=4[dB] |
| TRANSMISSION #4 | Y(4)=6[dB] |
| TRANSMISSION #5 | Y(5)=6[dB] |
| TRANSMISSION #6 | Y(6)=6[dB] |

FIG.13

FIG.14

ACK/NACK SIGNAL

CQI SIGNAL

PACKET
TRANSMISSION
CONTROL SIGNAL

| 305 | 303 | 306 | 304 |
|---|---|---|---|
| CQI DIFFERENCE CALCULATION SECTION | TRANSMIT POWER DETERMINING SECTION | IR GAIN DETERMINING SECTION | HS-SCCH SIGNAL GENERATION SECTION |

TRANSMISSION DESTINATION DETERMINING SECTION

301

MCS DETERMINING SECTION

302

TO BUFFER 152

TO MODULATION SECTION 153

TO TRANSMIT POWER CONTROL SECTION 154

TO AMPLIFICATION SECTION 161

151

FIG.15

EP 1 519 498 A1

FIG.16

FIG.17

ACK/NACK SIGNAL

CQI SIGNAL

PACKET
TRANSMISSION
CONTROL SIGNAL

**301**
TRANSMISSION
DESTINATION
DETERMINING
SECTION

**302**
MCS
DETERMINING
SECTION

**306**
IR GAIN
DETERMINING
SECTION

**303**
TRANSMIT
POWER
DETERMINING
SECTION

**304**
HS-SCCH
SIGNAL
GENERATION
SECTION

TO BUFFER 152

TO MODULATION
SECTION 153

TO TRANSMIT POWER
CONTROL SECTION 154

TO AMPLIFICATION
SECTION 161

**151**

**FIG.18**

FIG.19A

FIG.19B

FIG.19C

FIG.19D

[FIG.1]

TRANSMIT POWER

TRANSMISSION #1

(INITIAL TRANSMISSION)

TRANSMISSION #2

(RETRANSMISSION)

TRANSMISSION #3

(RETRANSMISSION)

TIME


[FIG.2]

ACK/NACK SIGNAL

CQI SIGNAL

PACKET TRANSMISSION CONTROL SIGNAL

PACKET DATA

DL TPC COMMAND

DEDICATED DATA CONTROL SIGNAL

COMMON CONTROL DATA

(CPICH, ETC.)

UL TPC COMMAND

CONTROL SIGNAL (DL TPC COMMAND)

(CQI, ACK/NACK, ETC.)

RECEIVED DATA

151  SCHEDULER

HS-SCCH SIGNAL

152  BUFFER (QUEUE)

UL TPC

153  MODULATION SECTION

157  MODULATION SECTION

162  MODULATION SECTION

107  TPC COMMAND GENERATION SECTION

OFFSET SIGNAL

160  TRANSMIT POWER CONTROL SECTION

154  TRANSMIT POWER CONTROL SECTION

158  TRANSMIT POWER CONTROL SECTION

163  TRANSMIT POWER CONTROL SECTION

106  SIR MEASURING SECTION

105  SEPARATION SECTION

104  DEMODULATION SECTION

166  TRANSMISSION RF SECTION

103  RECEPTION RF SECTION


[FIG.3]

203  RECEPTION RF SECTION

UL TPC COMMAND

257  TRANSMIT POWER CONTROL SECTION

258  TRANSMISSION RF SECTION

204  BUFFER

205  DEMODULATION SECTION (HS-SCCH)

208  DEMODULATION SECTION (DPCH)

212  CIR MEASURING SECTION

206  DEMODULATION SECTION (HS-PDSCH)

210  SIR MEASURING SECTION

213  CQI GENERATION SECTION

252  MODULATION SECTION

253  MODULATION SECTION

255  MODULATION SECTION

207  ERROR DETECTION SECTION

209  SEPARATION SECTION

211  TPC COMMAND GENERATION SECTION

CQI SIGNAL

ACK/NACK SIGNAL

TRANSMISSION DATA

DL TPC COMMAND

RECEIVED PACKET DATA

ACK/NACK SIGNAL

RECEIVED DATA

UL TPC COMMAND

DL TPC COMMAND


[FIG.4]

ACK/NACK SIGNAL

CQI SIGNAL

PACKET TRANSMISSION CONTROL SIGNAL

301  TRANSMISSION DESTINATION DETERMINING SECTION

TO BUFFER 152

302  MCS DETERMINING SECTION

TO MODULATION SECTION 153

303  TRANSMIT POWER DETERMINING SECTION

TO TRANSMIT POWER CONTROL SECTION 154

304  HS-SCCH SIGNAL GENERATION SECTION

TO AMPLIFICATION SECTION 161


[FIG.5]

HS-PDSCH TRANSMIT POWER

TRANSMISSION #1

(INITIAL TRANSMISSION)

TRANSMISSION #2

(RETRANSMISSION)

TRANSMISSION #3

(RETRANSMISSION)

TIME


[FIG.6]

HS-PDSCH TRANSMIT POWER

TRANSMISSION #1

(INITIAL TRANSMISSION)

TRANSMISSION #2

(RETRANSMISSION)

TRANSMISSION #3

(RETRANSMISSION)

TIME


[FIG.7]

ACK/NACK SIGNAL

CQI SIGNAL

PACKET TRANSMISSION CONTROL SIGNAL

301  TRANSMISSION DESTINATION DETERMINING SECTION

TO BUFFER 152

302  MCS DETERMINING SECTION

TO MODULATION SECTION 153

305  CQI DIFFERENCE CALCULATION SECTION

EP 1 519 498 A1

303 TRANSMIT POWER DETERMINING SECTION
TO TRANSMIT POWER CONTROL SECTION 154
304 HS-SCCH SIGNAL GENERATION SECTION
TO AMPLIFICATION SECTION 161


[FIG.8]
DOWNLINK QUALITY
TRANSMISSION #1
(INITIAL TRANSMISSION)
TRANSMISSION #2
(RETRANSMISSION)
TRANSMISSION #3
(RETRANSMISSION)
TIME


[FIG.9]
HS-PDSCH TRANSMIT POWER
TRANSMISSION #1
(INITIAL TRANSMISSION`
TRANSMISSION #2
(RETRANSMISSION)
TRANSMISSION #3
(RETRANSMISSION)
TIME


[FIG.10]
HS-PDSCH RECEPTION POWER
TRANSMISSION #1

(INITIAL TRANSMISSION)

TRANSMISSION #2

(RETRANSMISSION)

TRANSMISSION #3

(RETRANSMISSION)

TIME


[FIG.11]

ACK/NACK SIGNAL

CQI SIGNAL

PACKET TRANSMISSION CONTROL SIGNAL

301  TRANSMISSION DESTINATION DETERMINING SECTION

TO BUFFER 152

302  MCS DETERMINING SECTION

TO MODULATION SECTION 153

306  IR GAIN DETERMINING SECTION

303  TRANSMIT POWER DETERMINING SECTION

TO TRANSMIT POWER CONTROL SECTION 154

304  HS-SCCH SIGNAL GENERATION SECTION

TO AMPLIFICATION SECTION 161


[FIG.12]

IR TYPE H-ARQ

CC TYPE H-ARQ

IR GAIN


[FIG.13]

RETRANSMISSION PACKET        IR GAIN

TRANSMISSION #2

TRANSMISSION #3

TRANSMISSION #4

TRANSMISSION #5

TRANSMISSION #6


[FIG.14]

HS-PDSCH TRANSMIT POWER

TRANSMISSION #1

(INITIAL TRANSMISSION)

TRANSMISSION #2

(RETRANSMISSION)

TRANSMISSION #3

(RETRANSMISSION)

TIME


[FIG.15]

ACK/NACK SIGNAL

CQI SIGNAL

PACKET TRANSMISSION CONTROL SIGNAL

301  TRANSMISSION DESTINATION DETERMINING SECTION

TO BUFFER 152

302  MCS DETERMINING SECTION

TO MODULATION SECTION 153

305  CQI DIFFERENCE CALCULATION SECTION

303  TRANSMIT POWER DETERMINING SECTION

TO TRANSMIT POWER CONTROL SECTION 154

306  IR GAIN DETERMINING SECTION

304  HS-SCCH SIGNAL GENERATION SECTION

TO AMPLIFICATION SECTION 161

[FIG.16]

HS-PDSCH TRANSMIT POWER

TRANSMISSION #1

(INITIAL TRANSMISSION)

TRANSMISSION #2

(RETRANSMISSION)

TRANSMISSION #3

(RETRANSMISSION)

TIME

[FIG.17]

HS-PDSCH RECEPTION POWER

TRANSMISSION #1

(INITIAL TRANSMISSION)

TRANSMISSION #2

(RETRANSMISSION)

TRANSMISSION #3

(RETRANSMISSION)

TIME

[FIG.18]

ACK/NACK SIGNAL

CQI SIGNAL

PACKET TRANSMISSION CONTROL SIGNAL

301  TRANSMISSION DESTINATION DETERMINING SECTION

TO BUFFER 152

302  MCS DETERMINING SECTION

TO MODULATION SECTION 153

306  IR GAIN DETERMINING SECTION

303  TRANSMIT POWER DETERMINING SECTION

TO TRANSMIT POWER CONTROL SECTION 154

304  HS-SCCH SIGNAL GENERATION SECTION

TO AMPLIFICATION SECTION 161


[FIG.19A]

HS-PDSCH TRANSMIT POWER

TRANSMISSION #1

(INITIAL TRANSMISSION)

TRANSMISSION #2

(RETRANSMISSION)

TRANSMISSION #3

(RETRANSMISSION)

TIME


[FIG.19B]

HS-PDSCH TRANSMIT POWER

TRANSMISSION #1

(INITIAL TRANSMISSION)

TRANSMISSION #2

(RETRANSMISSION)

TRANSMISSION #3

(RETRANSMISSION)

TIME

[FIG.19C]

HS-PDSCH TRANSMIT POWER

TRANSMISSION #1

(INITIAL TRANSMISSION)

TRANSMISSION #2

(RETRANSMISSION)

TRANSMISSION #3

(RETRANSMISSION)

TIME

[FIG.19D]

HS-PDSCH TRANSMIT POWER

TRANSMISSION #1

(INITIAL TRANSMISSION)

TRANSMISSION #2

(RETRANSMISSION)

TRANSMISSION #3

(RETRANSMISSION)

TIME

<table>
<tr><td colspan="2"><strong>INTERNATIONAL SEARCH REPORT</strong></td><td>International application No.<br>PCT/JP03/14627</td></tr>
</table>

| | |
|---|---|
| **A. CLASSIFICATION OF SUBJECT MATTER**<br>Int.Cl⁷ H04B7/26, H04L1/18 | |

According to International Patent Classification (IPC) or to both national classification and IPC

**B. FIELDS SEARCHED**

Minimum documentation searched (classification system followed by classification symbols)
Int.Cl⁷ H04B7/24-7/26, H04B7/00-7/38, H04B1/16-1/18, H04L1/18

Documentation searched other than minimum documentation to the extent that such documents are included in the fields searched
| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2002-9692 A (Matsushita Electric Industrial Co., Ltd.),<br>11 January, 2002 (11.01.02),<br>Full text; all drawings<br>& WO 01/99328 A1 & AU 200174607 A<br>& EP 1207646 A1 & US 2002/0114404 A1<br>& KR 2002020971 A & CN 1381118 A | 1,2,7<br>3<br>4-6 |
| Y | WO 01/28127 A1 (QUALCOMM INC.),<br>19 April, 2001 (19.04.01),<br>Full text; all drawings<br>& AU 200077551 A & NO 200201653 A<br>& EP 1219044 A1 & KR 2002035168 A<br>& BR 200014586 A & CN 1379935 A<br>& TW 494650 A & JP 2003-515263 A<br>& MX 2002003541 A1 | 3 |

| | | | |
|---|---|---|---|
| ☒ Further documents are listed in the continuation of Box C. | | ☐ See patent family annex. | |

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>17 February, 2004 (17.02.04) | Date of mailing of the international search report<br>02 March, 2004 (02.03.04) |
| Name and mailing address of the ISA/<br>Japanese Patent Office | Authorized officer |
| Facsimile No. | Telephone No. |

Form PCT/ISA/210 (second sheet) (July 1998)

## INTERNATIONAL SEARCH REPORT

| International application No. |
| --- |
| PCT/JP03/14627 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2001-217771 A (Sharp Corp.),<br>10 August, 2001 (10.08.01),<br>& US 2001/0011023 A1 | 1-7 |
| A | JP 2001-292097 A (NTT Docomo Inc.),<br>19 October, 2001 (19.10.01),<br>& EP 1143635 A1          & US 2001/0046877 A1<br>& CN 1317885 A          & KR 2001095311 A | 1-7 |
| A | JP 2002-9741 A (NTT Docomo Inc.),<br>11 January, 2002 (11.01.02),<br>& EP 1168703 A2          & US 2002/0046379 A1<br>& CN 1336771 A          & KR 2002000541 A | 1-7 |

Form PCT/ISA/210 (continuation of second sheet) (July 1998)